# FASCICULE DE BREVET EUROPEEN

(11) **EP 2 193 101 B1**
(45) Date de publication et mention de la délivrance du brevet: **21.03.2018**
(21) Numéro de dépôt: 08859070.8
(22) Date de dépôt: 01.10.2008
(51) Int. Cl.: C02F 3/12

(54) **REACTEUR BIOLOGIQUE SEQUENTIEL A SELECTEUR POUR LE TRAITEMENT D'EAUX RESIDUAIRES URBAINES OU INDUSTRIELLES**
SEQUENZIELLER BIOLOGISCHER REAKTOR MIT EINEM SELEKTOR ZUR BEARBEITUNG STÄDTISCHER ODER INDUSTRIELLER ABWÄSSER
SEQUENTIAL BIOLOGICAL REACTOR HAVING A SELECTOR FOR THE TREATMENT OF MUNICIPAL OR INDUSTRIAL WASTEWATERS

(30) Priorité: 02.10.2007 FR 0706893
(43) Date de publication de la demande: 09.06.2010
(73) Titulaire: DEGREMONT, 92500 Rueil-Malmaison (FR)
(72) Inventeur: VION, Patrick, 78800 Houilles (FR); GELLIN, Robert, 8000 Arhus C (DK)
(74) Mandataire: Cabinet Armengaud Aîné
(86) Numéro de dépôt international: PCT/FR2008/001365
(87) Numéro de publication internationale: WO 2009/074753

(56) Documents cités:
- US-A- 5 013 441
- US-A- 5 989 428
- US-A1- 2004 206 699

## Description

L'invention est relative à un réacteur biologique séquentiel pour le traitement par boues activées d'eaux résiduaires urbaines ou industrielles, réacteur du genre de ceux qui comprennent :
- un bassin délimité par un radier et des parois périphériques,
- une entrée équipée d'un sélecteur déterminant un parcours en chicanes avec mise en contact de l'effluent à traiter et d'une partie des boues recirculées,
- un moyen pour évacuer l'eau traitée en partie haute du plan d'eau du bassin,
- et une sortie pour évacuer les boues en excès dans le fond du bassin.

US 5 989 428 montre un réacteur de ce genre qui permet de traiter du carbone seul ou combiné, du carbone et de l'azote total (application recommandée), associé selon les cas à une élimination physico-chimique et/ou biologique du phosphore.

Du fait qu'un tel réacteur fonctionne en mode séquentiel, à plan d'eau variable, une installation de traitement est généralement constituée de plusieurs réacteurs, ou cellules, afin d'assurer la continuité de l'alimentation, dans une séquence prédéterminée d'opérations constituant un cycle : remplissage et réaction, décantation, vidange. L'eau traitée est évacuée lors de la phase de vidange en suivant le plan d'eau.

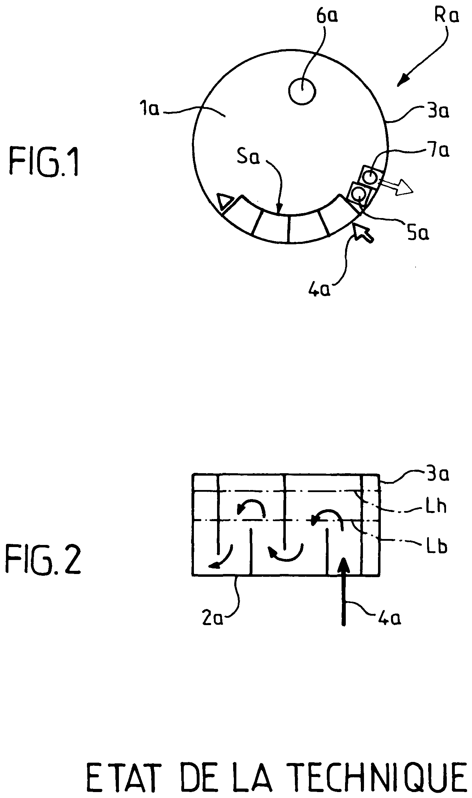

Un autre exemple de réacteur selon l'état de la technique est représenté sur les Fig.1 et 2 des dessins annexés. Le réacteur biologique séquentiel Ra comprend un bassin 1a de forme cylindrique à section horizontale circulaire dans l'exemple considéré. Cette forme pourrait être différente, notamment rectangulaire ou carrée. Le bassin est délimité par un radier 2a et une paroi périphérique verticale 3a.

Le réacteur comporte une entrée 4a pour l'effluent à traiter, équipée d'un sélecteur Sa déterminant un parcours en chicanes verticales avec mise en contact de l'effluent à traiter et d'une partie 5a recirculée des boues. Un moyen 6a schématiquement représenté, sous forme d'une pelle, est prévu pour évacuer l'eau traitée en partie haute du plan d'eau du bassin, et une sortie 7a est prévue dans le fond du bassin pour évacuer les boues en excès.

### Remplissage du réacteur et réaction

L'eau brute ou décantée primaire arrive par l'entrée 4a dans une zone située en tête du sélecteur Sa qui s'étend sur un secteur circulaire. Le sélecteur comporte des parois radiales verticales, créant les chicanes, solidaires de la paroi périphérique du bassin (le sélecteur peut être à l'intérieur ou l'extérieur du bassin 1). L'effluent à traiter est mis en contact avec la partie recirculée 5a des boues provenant du bassin 1a.

Pendant le remplissage, le niveau de liquide dans le bassin 1a s'élève d'un niveau bas Lb (Fig. 2) à un niveau haut Lh. La boue activée est aérée par des moyens classiques, par exemple buses ou diffuseurs d'injection d'air (non représentées) dans le fond du réacteur.

Le traitement biologique de l'effluent a lieu principalement pendant la phase de réaction :
- élimination du carbone et nitrification de l'azote ammoniacal pendant la période d'aération,
- dénitrification pendant la période anoxie éventuelle.

### Décantation

Le remplissage, l'aération et/ou le brassage de l'effluent dans le bassin 1a sont ensuite arrêtés pendant une durée prédéterminée. C'est au cours de cette période qu'a lieu, en décantation purement statique, la séparation de l'eau traitée de la boue. Une certaine activité biologique se poursuit avec dénitrification endogène du liquide au contact du lit de boue.

### Vidange

L'eau clarifiée surnageant est évacuée au moyen d'un système de reprise (par exemple une pelle) 6a qui suit le plan d'eau. L'épaississement du lit de boue et la dénitrification endogène en son sein se poursuivent. Les boues biologiques excédentaires sont extraites en fin de période de vidange.

Ce type de réacteur présente plusieurs avantages :
- compacité de l'installation, grâce à la suppression du ou des clarificateurs. En effet la clarification ne se fait pas dans un ouvrage séparé mais dans chaque réacteur de façon alternée. Ceci induit une forte réduction de l'emprise au sol des installations.
- contrôle du « bulking » (formation de boules de bactéries qui se mettent à flotter) : par son principe de fonctionnement le réacteur permet des séquences d'alimentation et de « famine », ce qui favorise le développement de formes floculées au détriment des bactéries filamenteuses responsables du « bulking » dans une certaine mesure.
- décantation optimale des boues : la décantation est optimale car statique, sans perturbation hydraulique, l'indice de boue (IB) étant meilleur qu'en traitement par boues activées conventionnel, avec absence de transfert d'un bassin à l'autre, d'où un rejet en matières en suspension (MES) de très bonne qualité.

### Intérêt du sélecteur

Le sélecteur Sa placé en tête du réacteur a un rôle très important. Le sélecteur est une zone de contact à forte charge massique, non aérée, située en amont du réacteur principal et dans laquelle sont mises en contact l'effluent à traiter et une partie des boues biologiques recirculées.

Le sélecteur Sa, par ses caractéristiques (flux piston à chicanes, temps de séjour hydraulique, forte charge massique) permet ainsi :
- de réduire les risques de foisonnement de boue en limitant ou empêchant le développement des bactéries filamenteuses se développant à faible charge massique,
- d'améliorer la décantabilité des boues (réduction de l'indice de boue IB)
- de favoriser l'hydrolyse de la pollution et le stockage de substrat soluble et, de ce fait, favoriser les réactions de dénitrification et de déphosphatation biologique dans le système.

Toutefois, le coût de construction d'un sélecteur n'est pas négligeable et pénalise les installations, surtout les petites et moyennes. La mise en oeuvre du sélecteur complique de façon importante un ouvrage au départ très simple et en conséquence augmente significativement le prix.

Les dimensions des réacteurs biologiques séquentiels sont importantes. A titre indicatif, le diamètre d'un réacteur de forme circulaire peut atteindre 40m, tandis que pour un réacteur de forme rectangulaire, sa longueur peut dépasser 50m. La hauteur des parois du bassin est généralement comprise entre 5 mètres et 7 mètres. Le sélecteur représente 5 à 15 % du volume global.

L'invention a pour but, surtout, de proposer un réacteur du genre défini précédemment qui soit équipé d'un sélecteur moins coûteux à réaliser, tout en répondant aux contraintes hydrauliques du réacteur et du processus.

Ces contraintes sont notamment les suivantes :
- s'approcher au plus près d'un écoulement flux piston, avec les chicanes et un minimum de zones mortes, en cherchant à réduire au minimum le volume du sélecteur ;
- un nombre de chicanes suffisant pour ne pas avoir de phénomènes de décantation sensibles, même à débit réduit,
- une sortie du sélecteur par le fond avec la plus grande section possible pour que, lors de la phase de vidange, le volume du sélecteur correspondant à la baisse du plan d'eau ne crée pas, lors de son écoulement dans le réacteur, un courant hydraulique qui remet en suspension les boues en phases de décantation.

Les réacteurs actuels conformes à l'état de la technique présentent des limites :
- le sélecteur est composé généralement d'au moins 4 éléments dont au moins 2 doivent tenir à la charge hydraulique d'eau lors des phases de remplissage ou de vidange. Ces charges différentielles amènent des contraintes locales importantes sur le génie civil et obligent à surdimensionner la structure du radier et l'épaisseur des parois, spécialement pour des réacteurs circulaires.
- la section de sortie du sélecteur pour l'entrée de l'effluent dans le réacteur, est limitée en hauteur (sa hauteur maximale correspond généralement à 1/5 de la hauteur totale), et en largeur qui est définie par des paramètres hydrauliques et de processus.

Pour résoudre ces problèmes, selon l'invention, le réacteur biologique séquentiel tel que défini précédemment est caractérisé en ce que :
- le sélecteur comprend une cuve disposée dans le bassin, à distance des parois périphériques,
- la cuve est compartimentée en plusieurs secteurs, la sortie d'un secteur, qui est aussi l'entrée du secteur suivant, étant alternativement basse et haute,ou inversement, la sortie du dernier secteur est toujours haute,
- et une dernière étape est définie par une chambre formée par deux cloisons qui s'étendent entre la paroi de la cuve et les parois périphériques du bassin et qui encadrent la sortie haute du dernier secteur de la cuve, le bord inférieur des cloisons étant à distance du radier et déterminant deux ouvertures basses de passage de l'effluent dans le bassin.

Avantageusement, la cuve formant sélecteur est cylindrique, à génératrices verticales. La cuve peut être posée, fixée, sur le radier du bassin ou érigée sur ce radier. La cuve peut être réalisée dans l'un des matériaux suivants : béton, métal, matière plastique.

Le nombre de secteurs compartimentant la cuve du sélecteur peut être compris entre 2 et 8, de préférence égal à 4.

L'alimentation du premier secteur de la cuve du sélecteur est haute pour un nombre pair de secteurs ou basse pour un nombre impair.

Les cloisons définissant la chambre relient, sans la lier, la surface externe du sélecteur aux parois du bassin. Les cloisons sont avantageusement constituées par des plaques, en matière plastique ou en bois, montées dans des rainures ou glissières verticales prévues sur les parois respectives du sélecteur et du bassin.

De préférence, la chambre déterminée par les cloisons a une section transversale au moins équivalente à celle de chacun des secteurs du sélecteur. Dans le cas d'un bassin à paroi périphérique cylindrique, l'axe de l'alimentation de la chambre est avantageusement perpendiculaire à la paroi de la cuve. Il en est de même pour un bassin rectangulaire si la cuve n'est pas dans l'angle. Si la cuve est placée dans un angle d'un bassin rectangulaire, l'axe de l'alimentation est avantageusement à 45°.

Des trous d'équilibrage partiel de la pression hydraulique peuvent être prévus en partie basse des parois des secteurs du sélecteur. Au moins un trou d'équilibrage partiel vers l'extérieur peut être prévu en partie basse de la paroi du dernier secteur du sélecteur.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est une vue schématique de dessus d'un réacteur biologique séquentiel à sélecteur selon l'état de la technique.
Fig. 2 est une vue schématique en élévation du réacteur de Fig. 1.
Fig.3 est une vue en plan schématique d'un réacteur de forme rectangulaire conforme à l'invention.
Fig. 4 est une coupe schématique suivant la ligne IV-IV de Fig.3.
Fig. 5 est une vue en plan schématique d'un réacteur circulaire selon l'invention, et
Fig. 6 est une vue schématique en coupe suivant la ligne VI-VI de Fig. 5.

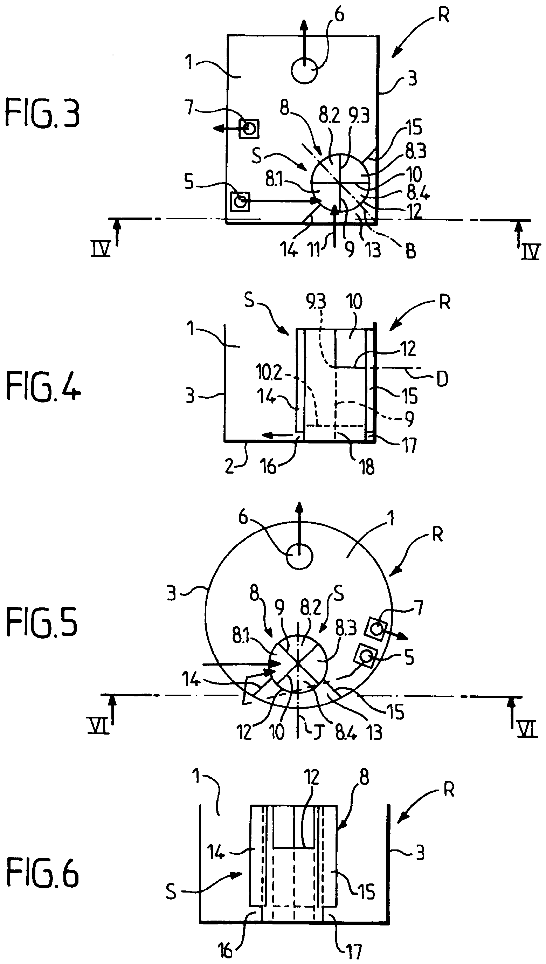

En se reportant aux Fig. 3 et 4 on peut voir un réacteur biologique séquentiel R conforme à l'invention. Les parties de ce réacteur jouant des rôles semblables à celles du réacteur Ra des Fig. 1 et 2 sont désignées par les mêmes lettres ou chiffres de référence sans être suivies de la lettre a. Leur description ne sera pas reprise ou ne sera effectuée que succinctement.

Pour l'exemple de réalisation de Fig. 3 et 4, le bassin 1 a une forme rectangulaire.

Selon l'invention, le sélecteur S comprend une cuve 8 disposée dans le bassin 1 à distance des parois périphériques 3. La cuve 8 est de préférence cylindrique, à section circulaire, à génératrices verticales. Elle peut être posée, c'est-à-dire simplement rapportée sur le radier 2, ou érigée sur ce radier au moment de la construction du bassin. La cuve 8 peut être préfabriquée en béton, en métal ou autre matière, notamment matière plastique. La cuve 8 est en béton lorsqu'elle est réalisée avec le radier. Lorsque la cuve 8 est posée sur le radier, des moyens de fixation de la cuve sur le radier peuvent être également prévus.

La hauteur de la cuve 8 est au moins égale à celle des parois périphériques 3 du bassin de telle sorte que la partie supérieure de la cuve 8 reste au-dessus du niveau d'eau le plus élevé dans le bassin 3. Le fond de la partie cylindrique de la cuve 8 peut être ouvert, le contact de la paroi cylindrique de la cuve 8 avec le radier établissant une séparation suffisante entre l'intérieur de la cuve et le bassin 1. La cuve, lorsqu'elle est rapportée, peut également comporter un fond. Généralement, la partie haute de la cuve est ouverte à l'atmosphère, mais un couvercle pourrait être prévu.

La forme cylindrique de la cuve 8 n'est pas limitative, cette cuve pouvant être par exemple prismatique à section polygonale.

La cuve 8 est compartimentée en plusieurs secteurs. Le nombre de secteurs est compris généralement entre 2 et 8, ce nombre étant de préférence égal à 4 comme illustré sur les Fig. 3 et 4. Les secteurs 8.1, 8.2, 8.3, 8.4, sont déterminés par deux cloisons diamétrales orthogonales 9,10 à l'intérieur de la cuve 8. Quatre secteurs de 90° sont ainsi définis, avec une même section de passage.

L'alimentation en effluent à traiter peut être assurée par une tuyauterie 11 qui débouche dans le premier secteur 8.1. Il en est de même pour la partie recirculée 5 des boues. L'alimentation par tuyauterie 11 se fait en partie haute du premier secteur 8.1 comme illustré sur Fig. 3 et 4 pour un nombre pair de secteurs de la cuve 8, comme expliqué plus loin.

La sortie d'un secteur, qui est aussi l'entrée du secteur suivant, est alternativement basse et haute, ou inversement.

Dans l'exemple de Fig. 3 et 4, l'entrée du secteur 8.1 s'effectue en partie haute. La sortie, qui assure le passage du secteur 8.1 vers le secteur 8.2, s'effectue en partie basse par un passage situé au-dessous du bord inférieur 10.2 (Fig.4) de la paroi 10 qui est situé à distance au-dessus du fond du bassin. La paroi 9 descend jusqu'au fond du bassin. Le courant de liquide est donc descendant dans le secteur 8.1, passe sous le bord inférieur 10.2 (Fig. 4) et remonte dans le secteur 8.2. Le bord supérieur 9.3 de la paroi 9 entre les secteurs 8.2 et 8.3 est situé à un niveau D (Fig. 4) légèrement plus bas que le niveau bas hydraulique Lb (voir schéma Fig 2), tandis que la paroi 10 s'étend vers le haut jusqu'à cette extrémité supérieure. L'écoulement du secteur 8.2 vers le secteur 8.3 s'effectue par-dessus le bord 9.3 et le courant est descendant dans le secteur 8.3 pour passer, en partie basse, au-dessous du bord 10.2 et remonter dans le secteur 8.4.

La disposition des entrées et sorties, hautes ou basses, pour les différents secteurs est réalisée de telle sorte que les zones mortes, c'est-à-dire des zones dans lequel le liquide est stationnaire, soient minimisées.

La sortie 12 (Fig. 4) du dernier secteur 8.4 de la cuve 8 est obligatoirement haute et est formée, par exemple, par un bord en arc de cercle situé au niveau D, légèrement plus bas que le niveau bas hydraulique Lb de la cuve 8.

Une dernière étape du sélecteur est définie par une chambre 13 formée par deux cloisons 14, 15 qui s'étendent entrent la paroi de la cuve 8 et les parois périphériques 3 du bassin. Les cloisons 14,15 encadrent la sortie haute 12 du dernier secteur 8.4 de la cuve. Les cloisons 14,15 verticales s'étendent jusqu'à l'extrémité haute de la cuve mais s'arrêtent, en partie basse à distance du fond du bassin pour laisser deux passages inférieurs 16, 17 (Fig. 4) faisant communiquer la chambre 13 avec le bassin 1 de part et d'autre de la cuve 8. La sortie du sélecteur S par le fond, vers le bassin 1, s'effectue donc avec une grande section égale à la somme des sections des passages 16, 17.

La chambre 13 est ainsi délimitée par un secteur de la paroi externe de la cuve cylindrique 8 et par les deux cloisons 14,15 qui peuvent être légères et qui relient, sans les lier, la cuve 8 aux parois périphériques 3 du bassin 1. Les cloisons 14,15 peuvent être réalisées sous forme de plaques notamment en matière plastique ou en bois, montées dans des rainures ou glissières verticales. La chambre 13 correspondant à la dernière étape du sélecteur a une section équivalente à celle de chacun des secteurs 8.1-8.4 de la cuve 8, ou peut être légèrement plus grande.

Du fait que les sorties 16,17 de la chambre 13 pour le passage dans le bassin 1 doivent se trouver en partie basse, l'alimentation du premier secteur 8.1 doit se faire en partie haute lorsque le nombre des secteurs de la cuve 8 est pair, ou en partie basse lorsque ce nombre est impair. Il en est de même pour la partie recirculée 5 des boues.

Dans l'exemple de Fig. 3 et 4, les cloisons 14, 15, qui peuvent être dans le prolongement l'une de l'autre, s'étendent entre le contour circulaire de la cuve 8 et deux parois périphériques à angle droit du bassin. L'axe de l'alimentation de la chambre 13 s'effectue de préférence à 45°, c'est-à-dire suivant la bissectrice B de l'angle droit du bassin 1 où se trouve la cuve 8.

Fig. 5 et 6 montrent une variante de réalisation du réacteur R dans laquelle le bassin 1 est circulaire. Les différentes parties du réacteur et du sélecteur semblables à des parties décrites à propos des Fig. 3 et 4 sont désignées par les mêmes références numériques sans que leur description soit reprise. La cuve 8 est située dans le bassin 1 à distance de la paroi périphérique 3. Les cloisons 14, 15 sont orientées sensiblement radialement par rapport au centre de la section circulaire de la cuve 8. L'axe J de l'alimentation de la chambre 13 passe par le centre de la section de la cuve 8 et est perpendiculaire à la paroi de cette cuve.

Du fait de la disposition adoptée, l'alimentation du bassin 1 par les sorties 16,17 est double et élargie par géométrie. Le bénéfice d'une telle alimentation est de pouvoir alimenter le bassin 1 à une vitesse 2 à 3 fois plus faible que dans la version conforme à l'état de la technique et de répartir les zones de turbulences. Cette disposition permet ainsi d'améliorer la sécurité de fonctionnement du réacteur, spécialement quand il fonctionne au débit proche du maxi. En final, on obtient un gain sur la qualité de l'eau traitée.

Pour minimiser l'épaisseur des parois internes 9,10 de la cuve 8 formant sélecteur, des trous d'équilibrage partiel 18 sont placés à la base de la paroi 10 ou 9. De même, pour minimiser l'épaisseur des parois de la cuve cylindrique 8, un trou d'équilibrage partiel vers l'extérieur peut être réalisé à la base du dernier secteur 8.4.

La solution de l'invention présente plusieurs avantages.

Le sélecteur S avec cuve 8, remplit les mêmes fonctions dans les mêmes conditions qu'un sélecteur classique, avec un avantage sur l'alimentation du bassin 1 qui se fait à une vitesse 2 à 3 fois plus faible, évitant des remontées du lit de boue pendant la phase de vidange.

La technique de réalisation du sélecteur S avec une cuve 8 indépendante, en particulier une cuve cylindrique, placée dans un bassin plat 1, rectangulaire ou circulaire, permet :
- de ne pas transmettre les efforts du sélecteur S aux parois périphériques 3 de la cuve, d'où un gain sur les épaisseurs de parois ;
- de réaliser le sélecteur S avec des parois moins épaisses quand on adopte une forme cylindrique pour la cuve 8 ;
- de réaliser la cuve 8 en préfabriqué ou en matériaux divers avec un gain en temps de réalisation.

Lorsque la cuve 8 est réalisée en béton, la cuve 8 et le bassin 1 peuvent être réalisés en même temps, d'où un gain également en temps de construction.

En final, le gain sur la construction du réacteur peut être chiffré à plus de 10% et le délai de construction réduit de plusieurs semaines.

## Revendications

1. Réacteur biologique séquentiel pour le traitement par boues activées d'eaux résiduaires urbaines ou industrielles, comprenant :
- un bassin (1) délimité par un radier (2) et des parois périphériques, (3)
- une entrée (11) équipée d'un sélecteur (S) déterminant un parcours en chicanes avec mise en contact de l'effluent à traiter et d'une partie des boues recirculées,
- un moyen pour évacuer l'eau traitée en partie haute du plan d'eau du bassin,
- et une sortie pour évacuer les boues en excès dans le fond du bassin, **caractérisé en ce que** le sélecteur comprend une cuve (8) disposée dans le bassin (1), à distance des parois périphériques (3), la cuve (8) est compartimentée en plusieurs secteurs (8.1, 8.2, 8.3 , 8.4), la sortie d'un secteur, qui est aussi l'entrée du secteur suivant, étant alternativement basse et haute, ou inversement, la sortie de la cuve (12) étant obligatoirement haute, et une dernière étape est définie par une chambre (13) formée par deux cloisons (14, 15) qui s'étendent entre la paroi de la cuve (8) et les parois périphériques (3) du bassin et qui encadrent la sortie haute (12) du dernier secteur de la cuve, le bord inférieur des cloisons étant à distance du radier et déterminant deux ouvertures basses (16, 17) de passage de l'effluent dans le bassin.

2. Réacteur selon la revendication 1, **caractérisé en ce que** la cuve (8) formant sélecteur est cylindrique, à génératrices verticales.

3. Réacteur selon la revendication 1 ou 2, **caractérisé en ce que** la cuve (8) formant sélecteur est fixée sur le radier (2) du bassin.

4. Réacteur selon la revendication 1 ou 2, **caractérisé en ce que** la cuve (8) formant sélecteur est érigée sur le radier (2).

5. Réacteur selon l'une quelconque des revendications précédentes, **caractérisé en ce que** la cuve du sélecteur est réalisée dans l'un des matériaux suivants : béton, métal, matière plastique.

6. Réacteur selon l'une quelconque des revendications précédentes, **caractérisé en ce que** le nombre de secteurs compartimentant la cuve (8) du sélecteur est compris entre 2 et 8.

7. Réacteur selon la revendication 6, **caractérisé en ce que** le nombre de secteurs compartimentant la cuve (8) du sélecteur est égal à 4.

8. Réacteur selon l'une quelconque des revendications précédentes, **caractérisé en ce que** l'alimentation (11) du premier secteur de la cuve du sélecteur est haute pour un nombre pair de secteurs ou basse pour un nombre impair.

9. Réacteur selon l'une quelconque des revendications précédentes, **caractérisé en ce que** les cloisons (14, 15) définissant la chambre (13) relient, sans la lier, la surface externe du sélecteur aux parois du bassin.

10. Réacteur selon l'une quelconque des revendications précédentes, **caractérisé en ce que** les cloisons (14, 15) sont constituées par des plaques, en matière plastique ou en bois, montées dans des rainures ou glissières verticales prévues sur les parois respectives du sélecteur et du bassin.

11. Réacteur selon l'une quelconque des revendications précédentes, **caractérisé en ce que** la chambre (13) déterminée par les cloisons (14,15) a une section transversale au moins équivalente à celle de chacun des secteurs du sélecteur.

12. Réacteur selon l'une quelconque des revendications précédentes, comportant un bassin à paroi périphérique cylindrique (ou rectangulaire si la cuve (8) n'est pas dans l'angle), **caractérisé en ce que** l'axe (J) de l'alimentation de la chambre (13) est perpendiculaire à la paroi de la cuve (8)

13. Réacteur selon l'une quelconque des revendications 1 à 11, comportant un bassin à paroi périphérique rectangulaire avec la cuve (8) dans un angle, **caractérisé en ce que** l'axe (J) de l'alimentation de la chambre (13) est à 45°.

14. Réacteur selon l'une quelconque des revendications précédentes, **caractérisé en ce que** des trous (18) d'équilibrage partiel de la pression hydraulique sont prévus en partie basse des parois des secteurs du sélecteur.

15. Réacteur selon l'une quelconque des revendications précédentes, **caractérisé en ce qu'**au moins un trou d'équilibrage partiel vers l'extérieur est prévu en partie basse de la paroi du dernier secteur du sélecteur.

## Patentansprüche

1. Sequentieller biologischer Reaktor zur Behandlung städtischer oder industrieller Abwässer mit Belebtschlamm, mit:
- einem Becken (1), das von einer Bodenplatte (2) und Umfangswänden (3) begrenzt ist,
- einem Einlass (11), der mit einem Selektor (S) versehen ist, welcher eine Bahn aus Ablenkplatten bildet, auf welcher das zu behandelnde Abwasser und ein Teil des umgewälzten Schlamms miteinander in Kontakt gebracht werden,
- einer Einrichtung zum Abführen von behandeltem Wasser im oberen Bereich des Wasserspiegels des Beckens,
- und einem Auslass zum Abführen des überschüssigen Schlamms im Boden des Beckens,
**dadurch gekennzeichnet, dass** der Selektor einen Behälter (8) aufweist, der von den Umfangswänden (3) beabstandet in dem Becken (1) angeordnet ist,
der Behälter (8) in mehrere Sektoren (8.1, 8.2, 8.3, 8.4) unterteilt ist, wobei der Auslass eines Sektors, welcher gleichzeitig der Einlass des nachfolgenden Sektors ist, alternativ unten oder oben oder umgekehrt vorgesehen ist, wobei der Auslass des Behälters (12) zwingend oben vorgesehen ist,
und eine letzte Etappe durch eine Kammer (13) definiert ist, welche durch zwei Trennwände (14, 15) gebildet sind, die sich zwischen der Wand des Behälters (8) und den Umfangswänden (3) des Beckens erstrecken und welche den oberen Auslass (12) des letzten Sektors des Behälters (8) umschließen, wobei der untere Rand der Trennwände von der Bodenplatte beabstandet ist und zwei untere Öffnungen (16, 17) für den Durchtritt des Abwassers in das Becken bilden.

2. Reaktor nach Anspruch 1, **dadurch gekennzeichnet, dass** der den Selektor bildende Behälter (8) zylindrisch mit vertikalen Mantelflächen ist.

3. Reaktor nach Anspruch 1 oder 2, **dadurch gekennzeichnet, dass** der den Selektor bildende Behälter (8) an der Bodenplatte (2) des Beckens befestigt ist.

4. Reaktor nach Anspruch 1 oder 2, **dadurch gekennzeichnet, dass** der den Selektor bildende Behälter (8) auf der Bodenplatte (2) aufgestellt ist.

5. Reaktor nach einem der vorhergehenden Ansprüche, **dadurch gekennzeichnet, dass** der Behälter des Selektors aus einem der folgenden Materialien hergestellt ist: Beton, Metall, Kunststoff.

6. Reaktor nach einem der vorhergehenden Ansprüche, **dadurch gekennzeichnet, dass** die Anzahl der den Behälter (8) des Selektors unterteilenden Sektoren zwischen 2 und 8 beträgt.

7. Reaktor nach Anspruch 6, **dadurch gekennzeichnet, dass** die Anzahl der den Behälter (8) des Selektors unterteilenden Sektoren gleich 4 ist.

8. Reaktor nach einem der vorhergehenden Ansprüche, **dadurch gekennzeichnet, dass** die Zuleitung (11) des ersten Sektors des Behälters des Selektors bei einer geraden Zahl von Sektoren oben oder bei einer ungeraden Zahl von Sektoren unten vorgesehen ist.

9. Reaktor nach einem der vorhergehenden Ansprüche, **dadurch gekennzeichnet, dass** die Trennwände (14, 15), welche die Kammer (13) bilden, die Außenfläche des Selektors mit den Wänden des Beckens verbinden, ohne diese miteinander zu verbinden.

10. Reaktor nach einem der vorhergehenden Ansprüche, **dadurch gekennzeichnet, dass** die Trennwände (14, 15) durch Platten aus Kunststoff oder aus Holz gebildet sind, welche in vertikalen Nuten oder Gleitschienen montiert sind, die auf den jeweiligen Wänden des Selektors und des Beckens vorgesehen sind.

11. Reaktor nach einem der vorhergehenden Ansprüche, **dadurch gekennzeichnet, dass** die durch die Trennwände (14, 15) gebildete Kammer (13) einen Querschnitt aufweist, der mindestens äquivalent demjenigen jedes der Sektoren des Selektors ist.

12. Reaktor nach einem der vorhergehenden Ansprüche, mit einem Becken mit zylindrischer (oder, wenn sich der Behälter (8) nicht in der Ecke befindet, rechteckiger) Umfangswand, **dadurch gekennzeichnet, dass** die Achse (J) der Zuleitung (11) der Kammer (13) senkrecht zur Wand des Behälters (8) verläuft.

13. Reaktor nach einem der Ansprüche 1 bis 11, mit einem Becken mit rechteckiger Umfangswand mit in einer Ecke befindlichem Behälter (8), **dadurch gekennzeichnet, dass** die Achse (J) der Zuleitung (11) der Kammer (13) bei 45° liegt.

14. Reaktor nach einem der vorhergehenden Ansprüche, **dadurch gekennzeichnet, dass** Löcher (18) für einen teilweisen Hydraulikdruckausgleich im unteren Teil der Wände der Sektoren des Selektors vorgesehen sind.

15. Reaktor nach einem der vorhergehenden Ansprüche, **dadurch gekennzeichnet, dass** mindestens ein Loch für den teilweisen Ausgleich nach außen im unteren Teil der Wand des letzten Sektors des Selektors vorgesehen ist.

## Claims

1. A sequential biological reactor for the treatment of municipal or industrial wastewater by activated sludge, which reactor comprises:
- a basin bounded by a floor and peripheral walls;
- an inlet equipped with a selector (S) that determines a baffled path with the effluent to be treated coming into contact with a portion of the recirculated sludge;
- a means for discharging the treated water at the top of the water surface of the basin; and
- an outlet for discharging the excess sludge into the bottom of the basin, **characterized in that**:
- the selector comprises a tank (8) placed in the basin (1) at a certain distance from the peripheral walls (3);
- the tank is compartmentalized into several sectors (8.1, 8.2, 8.3, 8.4), the outlet from one sector, which is also the inlet of the following sector, being alternately at the bottom and at the top, or conversely, the outlet of the tank being necessarily at the top; and
- a final stage is defined by a chamber (13) formed by two partitions (14, 15) which extend between the wall of the tank (8) and the peripheral walls (3) of the basin and which flank the top outlet (12) of the last sector of the tank, the lower edge of the partitions being at a certain distance from the floor and determining two bottom openings (16, 17) for the effluent to flow into the basin.

2. The reactor as claimed in claim 1, **characterized in that** the tank (8) forming the selector is cylindrical, with vertical generatrices.

3. The reactor as claimed in claim 1 or 2, **characterized in that** the tank (8) forming the selector is fixed to the floor (2) of the basin.

4. The reactor as claimed in claim 1 or 2, **characterized in that** the tank (8) forming the selector is erected on the floor (2).

5. The reactor as claimed in any one of the preceding claims, **characterized in that** the tank of the selector is produced in one of the following materials: concrete, metal, plastic.

6. The reactor as claimed in any one of the preceding claims, **characterized in that** the number of sectors compartmentalizing the selector tank (8) is between 2 and 8.

7. The reactor as claimed in claim 6, **characterized in that** the number of sectors compartmentalizing the selector tank (8) is equal to 4.

8. The reactor as claimed in any one of the preceding claims, **characterized in that** the feed (11) for the first sector of the selector tank is at the top for an even number of sectors or at the bottom for an odd number.

9. The reactor as claimed in any one of the preceding claims, **characterized in that** the partitions (14, 15) defining the chamber (13) connect, without linking it, the external surface of the selector to the walls of the basin.

10. The reactor as claimed in any one of the preceding claims, **characterized in that** the partitions (14, 15) are formed by plastic or wooden plates mounted in vertical grooves or slideways provided in the respective walls of the selector and of the basin.

11. The reactor as claimed in any one of the preceding claims, **characterized in that** the chamber (13) defined by the partitions has a cross section at least equivalent to that of each of the sectors of the selector.

12. The reactor as claimed in any one of the preceding claims, comprising a basin with a cylindrical peripheral wall (or a rectangular peripheral wall if the tank (8) is not in the corner), **characterized in that** the feed axis (J) of the chamber (13) is perpendicular to the wall of the tank (8).

13. The reactor as claimed in any one of claims 1 to 11, comprising a basin having a rectangular peripheral wall with the tank (8) in one corner, **characterized in that** the feed axis (J) of the chamber (13) is at 45°.

14. The reactor as claimed in any one of the preceding claims, **characterized in that** holes (18) for partial equilibration of the hydraulic pressure are provided in the bottom part of the walls of the sectors of the selector.

15. The reactor as claimed in any one of the preceding claims, **characterized in that** at least one hole for partial equilibration to the outside is provided in the bottom part of the wall of the last sector of the selector.
